# EUROPEAN PATENT SPECIFICATION

(11) **EP 1 177 714 B1**
(45) Date of publication and mention of the grant of the patent: **21.11.2012**
(21) Application number: 00925836.9
(22) Date of filing: 27.04.2000
(51) Int. Cl.: H05H 1/46

(54) **METHOD AND APPARATUSES FOR PLASMA TREATMENT**
VERFAHREN UND VORRICHTUNGEN ZUR PLASMABEHANDLUNG
PROCEDE ET APPAREILS POUR TRAITEMENT AU PLASMA

(30) Priority: 28.04.1999 SE 9901527; 20.01.2000 SE 0000167
(43) Date of publication of application: 06.02.2002
(73) Proprietor: Baránková, Hana, 756 43 Uppsala (SE); Bárdos, Ladislav, 756 43 Uppsala (SE)
(72) Inventor: Baránková, Hana, 756 43 Uppsala (SE); Bárdos, Ladislav, 756 43 Uppsala (SE)
(74) Representative: Mrazek, Werner
(86) International application number: PCT/SE2000/000791
(87) International publication number: WO 2000/065887

(56) References cited:
- EP-A2- 0 659 465
- EP-A2- 0 788 870
- EP-A2- 0 881 865
- DE-A1- 4 235 953
- DE-C1- 19 717 889
- DE-C1- 19 717 890
- US-A- 5 225 659

## Description

### FIELD OF THE INVENTION

The present invention relates to an apparatus for plasma treatment at gas pressures exceeding 13.3 kPa (≈100 Torr), particularly for plasma treatment of gas such as transformation, passivation and stabilization of polluting and toxic admixtures or treatment of surfaces such as functionalization, activation, disinfecting, sterilization, drying, etching or cleaning the surfaces and activated deposition of films.

### BACKGROUND

The treatment of different solid, liquid and gas wastes and hazardous residues represents a very important environmental technology, particularly treatment of industrial flue gases and exhaust gases from engines, due to their pollution of the air by NOₓ, SOₓ, soot, hydrocarbons, volatile organic compounds, etc. The most common methods are based on chemical reactions, pyrolytic combustion and different catalyst filters. Chemical filters are often used for treatment of flue gas from industrial and energy production. They can treat large throughputs of gases, but their substantial disadvantage is formation of byproducts (e.g., NH₃, CaO₂, etc.). Catalysts are regularly used for instance in car exhaust after-treatment. Typical catalyst materials are based on Pt or different metal oxides e.g., V₂O₅, WO₃, TiO₂, ZnO, etc. Despite their simplicity the catalyst filters often exhibit limited efficiency, particularly in Diesel engines, and strong temperature dependence.

Contrary to the conventional chemical and pyrolytical technologies, the gas discharge plasma treatment often leads to apparently more efficient transformation reactions with little or no undesirable byproducts. This is given by the possibilities either to achieve extremely high gas temperatures in the plasma, or to generate very reactive species through dissociation, activation or ionization of gaseous and volatile components in the plasma. Pyrolytic effect of plasma can be achieved for instance in atmospheric pressure arc torches at high powers generating large current densities in the ionized gas. These plasmas are called equilibrium or thermal plasmas and they are characterized by high collision frequencies, which equalize energy of all particles present. The energies (temperature) of electrons and ions are practically the same and they approach the energy of neutral species in the partially ionized plasma. The gas temperature is high, up to several thousands degrees centigrades, hence the term "thermal" plasma. The thermal plasma is very suitable for irreversible thermal treatments e.g., for combustion of solid and liquid wastes, or in plasma metallurgy, etc. However, due to heating of all species evenly the energy consumption in thermal plasmas is typically high. At equilibrium conditions the gaseous products of plasma chemical reactions are often unstable due to almost equivalent probability of reverse chemical reactions. The efficiency of thermal plasmas for plasma chemical treatment of gases is therefore low in comparison with so called non-equilibrium plasmas. Non-equilibrium plasma can be simply generated at reduced gas pressure. Then the frequency is lower and due to different electron and ion masses (the electron mass is 9.11 x 10⁻³¹ kg, the proton mass is 1.67 x 10⁻²⁷ kg) the electrons can acquire much higher kinetic energy than ions. When the plasma is generated by a very high frequency electromagnetic field, the power is acquired mainly by mobile electrons, while heavy ions are not able to even follow changes of the field and move only due to their thermal energies similar to the rest of the neutral gas. This leads to the plasma in which the chemical reactions are very effective while the bulk of gas remains relatively cold. The non-equilibrium plasma is therefore often noted as "cold" plasma. Interactions of high-energy electrons with gas can produce extremely reactive atoms and radicals, which are able to generate subsequent chemical reactions not available at normal conditions. A very high plasma chemical activity of such plasmas can be utilized in different applications (see for instance a pioneering work of F.K. McTaggart: "Plasma Chemistry in Electrical Discharges", Elsevier, Amsterdam, 1967). However, due to necessity of pumping systems, the reduced and low-pressure non-equilibrium plasmas are not utilized in industrial scale waste treatments. An apparatus for minimizing deposition in an exhaust line of a substrate processing chamber based on a microwave plasma and DC or RF plasma arrangements is disclosed in the European Patent Application EP 0 839 929 A1. Such apparatus is intended either to connect to or replace a portion of the vacuum pumping line of the processing reactor at reduced and low pressures for preventing the particulate matter in the pumping line or for reduction of volatile by products pumped out from the processes in semiconductor technology.

An emerging technology in this field is non-equilibrium plasma of atmospheric pressure. The degree of energy non-equilibrium is somewhat lower than in low-pressure plasmas and strongly depends on the arrangement of individual reactors. However, the absence of pumps simplifies all systems substantially and in principle allows their immediate application for large gas throughputs. On the other hand the efficiency of known systems is still not high enough for their utilization in an industrial scale. The non-equilibrium conditions at atmospheric pressure can be achieved in several ways. The most direct way is an injection of an electron beam into the gas. A serious disadvantage of the method is that it acts only in a limited space and that the penetration depth of the beam at atmospheric pressure is rather short. Moreover the electron gun system is quite complicated and expensive and it does not show satisfactory energy efficiency. The more common way of generation of the non-equilibrium plasma is a high voltage breakdown of the gas in form of many filamentary current channels - plasma streamers. A typical representative is corona discharge between a sharp edged or sharp tipped electrode (cathode or anode) and the grounded counter electrode. At a high frequency generation (orders of 1 kHz up to more than 1 MHz) and high voltage (10 - 30 kV), the counter-electrode may be covered by a dielectric wall (barrier) and then the system works with a barrier (also "silent") discharge. The generation of local current streamers in the systems mentioned above provides local non-equilibrium plasmas when the rest of the gas remains "cold". A great advantage found in coronas and barrier discharges is a pulsed generation, for instance see U.S. Patent No. 5,603,893 to M. Gunderson et al. (1997). The high power pulse allows quick pumping of the power into the streamers causing strong non-equilibrium plasma usually at the beginning of the pulse with the relaxation into the equilibrium conditions depending on both the pulse shape and the duty cycle. Although all these systems in both stationary and pulsed regimes are very advanced, the region where the gas interacts with streamers is not dense enough or of sufficient volume (bulk) for treatment of all the gas passing the reactor zone. Both the corona and barrier discharges can be used for treatment of surfaces, but their efficiency is quite low. Moreover, the formation of plasma streamers may cause undesirable local damages of the treated surfaces. Another very sophisticated reactor is composed from an axial system of at least one pair (typically three pairs) of knife sharp electrodes facing each other by sharp edges and connected to the high voltage generator, see for instance French patent No. 2639172 (1988) to H. Lesueur et al. Arc streamers between related electrodes are gliding over the sharp edges between opposite electrodes and also around the axial system of electrodes following the phase movement in a 3-phase generator.

Generation of bulk atmospheric pressure non-equilibrium plasma is possible by microwave power. This type of generation is based on very high frequency (typically 2.45 GHz and more) connected with the pumping of power directly into electrons. Although the advantage of microwave systems is a denser plasma volume than in the case of streamers, substantial disadvantages are low efficiency and short lifetime of microwave generators and limited plasma dimensions (related to the size of the wave-guide). Therefore, in spite of their discrete streamer character the most serious candidates considered for industrial atmospheric pressure plasma treatment of gas are still the pulsed corona, pulsed barrier discharge and the gliding arc.

Non-equilibrium plasma with very high degree of activation can be generated at reduced pressures by hollow cathodes. Since their discovery by F. Paschen in 1916, the hollow cathodes have been used for quite a long time as the sources of intense light for atomic spectroscopy. Experiments of Little and von Engel in 1954 revealed clearly the principle of an exceptionally high plasma density and activation in hollow cathodes through so called "hollow cathode effect". This effect is based on a special geometry in the cathode, where the opposite walls have the same electric potential with respect to a common anode. In a direct current (DC) arrangement of the diode gas discharge the cathode wall is covered by cathode dark space in which electrons emitted from the cathode surface are accelerated towards the anode. In the suitable "hollow geometry" when the cathode fall regions of opposite cathode surfaces are close to each other, the emitted electrons can meet the opposite region with the equal opposite electric field of the cathode fall region. Electrons are therefore repelled back and undergo oscillations called a "pendulum electron motion". This kind of motion leads to confinement of electrons and intensifies their interactions with the gas present in the hollow cathode, which promotes dramatically overall efficiency of the ionization and subsequent effects, terminating in a very high density active plasma. Hollow cathodes are capable of production of electron beams having energies comparable to the cathode fall potential and, moreover, their extraordinary abilities are already known also for generation of different plasma chemical reactions in gases for applications mainly in surface processing. Moreover, due to non-Maxwellian energy distributions and existence of high energy electron populations the hollow cathode discharge emits an intense radiation in UV (≤ 300 nm) and VUV (≤ 200 nm) regions capable to breakdown most chemical bonds and to induce different photochemical reactions.

Compared to the DC generation of the hollow cathode, an alternating current (AC) and particularly a radio frequency (RF) generation provides a number of advantages. In this case the most positive body in the system is the gas discharge plasma outside the cathode. This plasma can substitute a "virtual anode" and is naturally flexible with respect to any cathode geometry. As a consequence, the hollow cathode behaves as a unipolar discharge (see e.g. L. Bárdos et al., Thin Solid Films 1987, or recent reviews by L. Bárdos et al., Surf. Coat. Technol. 1996 and 1997). The AC generation has also an important thermal stabilizing effect.

To satisfy conditions for the hollow cathode effect the distance between the opposite walls in the cathode must be in suitable relation with the thickness of the cathode fall, or the space charge sheath in the RF case, to enable the electron exchange. One of the most important parameters is the gas pressure, which affects both the thickness of the cathode regions and the electron recombination by collisions. Therefore the hollow cathodes are operated typically at reduced pressures, below the order of 1.33 kPa (≈10 Torr). Very recently the cylindrical closed end DC molybdenum hollow cathodes with diameters below 0.1 mm were reported to work at air pressures of 350 Torr ≈ 50 kPa (K.H.Schoenbach et al., Appl. Phys. Lett. 1996). Similar DC cathodes with diameters of 0.2 - 0.4 mm and 0.5-5 mm in depth were reported to sustain the nitrogen discharge even beyond the atmospheric pressure (> 750 Torr ≈ 100 kPa), see J.W. Frame et al., Appl. Phys. Lett, 1997. Atmospheric pressure xenon discharges were generated in a 0.1 mm diameter dc hollow cathode by A. Al-Habachi and K.H. Schoenbach (Appl. Phys. Lett. 1998). These DC hollow cathode discharges were able to produce intense UV and VUV excimer emissions. A similar electrode system, consisting of a microhollow electrode system (Mo foils separated by alumina) and an additional electrode with variable distance from the anode was reported. However, a limiting factor of power density did prevent generating large volume plasmas by superimposing microhollow cathode discharges through parallel operation (R. H. Stark and K. H. Schoenbach, Appl. Phys. Lett., 1999). Arrays of the closed end micro-hollow cathodes have been used in UV lamp applications, see U.S. Patent No. 5,686,729 (1995) to K.H. Schoenbach et al*.*

No works, arrangements or results have yet been found published regarding the utilization of hollow cathodes for treatment of a flowing gas or for passivation of polluting and toxic gas mixtures neither at atmospheric pressure nor at reduced pressures. Moreover there are no works known yet reporting on AC generated hollow cathodes or related reactors for this purpose at atmospheric pressure.

### SUMMARY

An object of present invention is therefore to overcome the drawbacks of the above described prior art techniques and to provide a method and an apparatus for plasma treatment of gas, particularly for transformation, passivation and stabilization of polluting and toxic admixtures and for plasma treatment of surfaces at gas pressures exceeding 13.3 kPa (≈100 Torr), applying plasma treatment of gas.

In a first aspect according to the present invention, a method for plasma treatment of gas, at gas, pressures exceeding 13.3 kPa, comprises steps of flowing a gas to be treated through a hollow cathode with a hollow cathode discharge plasma being generated by a generator coupled with said hollow cathode and with a counter electrode. The gas undergoes interactions with oscillating electrons in the hollow cathode discharge plasma generated in the gas or in a particular embodiment a mixture of the gas and an auxiliary gas, in which the auxiliary gas intensifies an ultraviolet radiation and/or plasma-chemical reactions. The hollow cathode discharge plasma also interacts with the inner walls of the hollow cathode having a temperature below its melting point, the inner walls have a catalytic effect and/or are capable of releasing wall species promoting plasma-chemical reactions in the hollow cathode discharge plasma. After being treated in the hollow cathode discharge plasma the gas will be flowing out as a transformed gas.

In a second aspect according to the present invention an apparatus is disclosed for plasma treatment at gas pressures exceeding 13.3 kPa.-The apparatus comprises generator means, and a means for heating and/or cooling. The apparatus consists of at least one hollow cathode connected with the means for heating and/or cooling, whereby the cathode has a length, which is longer than a distance, of less than 1 mm, between opposite walls and is disposed for generation of a hollow cathode discharge plasma by means of the generator coupled with the hollow cathode and a counter electrode. The counter electrode is disposed as an inlet of a gas to be treated in the hollow cathode discharge plasma generated in the gas or in a mixture of the gas and an auxiliary gas.

The characteristics of the present method are set forth by the independent claim 1 and a further embodiment is set forth by the dependent claim 2, while the characteristics of a apparatus for treatment according to the present invention is set forth by the independent claim 3 and further embodiments are set forth by the dependent claims 4 to 20.

### BRIEF DESCRIPTION OF THE DRAWINGS

The objects, features and advantages of the present invention as indicated above will become apparent from the description of the invention given in conjunction with the appended drawings, wherein:
- Fig. 1: is a schematic representation of the method for plasma treatment of gas, particularly for transformation, passivation and stabilization of polluting and toxic admixtures according to the present invention;
- Fig. 2: is a schematic view of an embodiment of an apparatus for plasma treatment of gas, particularly for transformation, passivation and stabilization of polluting and toxic admixtures according to the method described in the present invention;
- Fig. 3: is a schematic representation of a second embodiment of the apparatus according to the present invention;
- Fig. 4: demonstrates different geometries of integrated systems of hollow cathodes for treatment of gas in apparatus according to the present invention;
- Fig. 5: shows in a schematic view a cross section of an integrated system of cylindrical hollow cathodes aligned with a complementary system forming cathode terminations with sharp edges for enabling initiation and maintenance of the hollow cathode discharge plasma;
- Fig. 6: shows in a schematic view a cross section of an integrated system of hollow cathodes with conical forms aligned with a complementary system having a set of sharp cones centered in the hollow cathodes for enabling initiation and maintenance of the hollow cathode discharge plasma;
- Fig. 7: shows in a schematic view a cross section of an integrated system of hollow cathodes with opposite system of sharp tips arranged at a quenching electrode for enabling initiation and maintenance of the hollow cathode discharge plasma;
- Fig. 8: shows in a schematic view an integrated system of hollow cathodes with a particle filter arranged as a counter electrode;
- Fig. 9: shows in a schematic view an apparatus according to the present invention where a transformed gas is used for subsequent treatment of surfaces.
- Fig. 10: demonstrates examples of the integrated system of hollow cathodes from sheaths and grids, for the apparatus according to the present invention;
- Fig. 11: is a schematic view of an embodiment of an apparatus for treatment of planar substrates according to the present invention, with a shielding against the ambient atmosphere;
- Fig. 12: shows in a schematic cross sectional view of a first example of an apparatus for inside treatment of hollow substrates, according to the present invention; and
- Fig. 13: shows in a schematic view of a second example of the apparatus for inside treatment of hollow substrates, according to the present invention.

### DETAILED DESCRIPTION

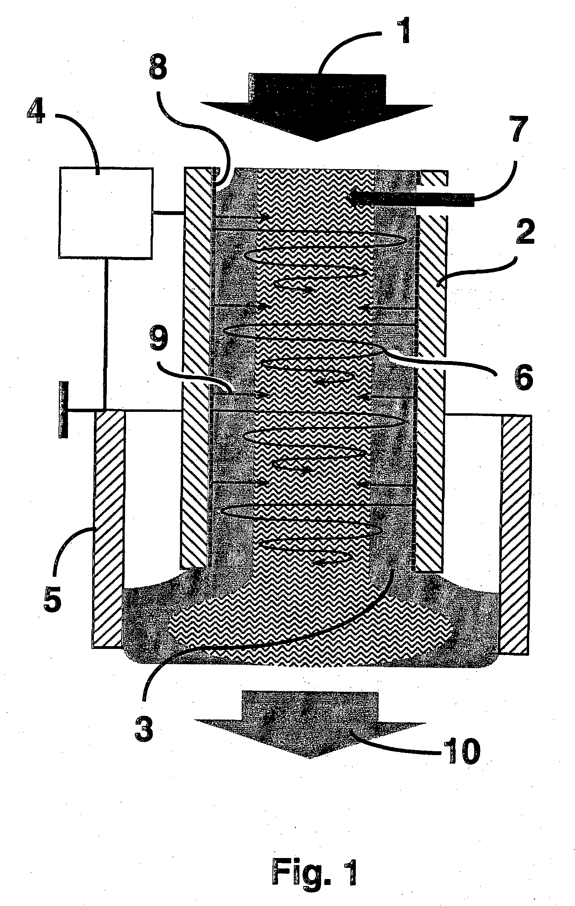

Referring to Fig. 1, the method according to the present invention will be described. A gas 1 to be treated is flowing through a hollow cathode 2 with a hollow cathode discharge plasma 3 generated by a generator 4 connected to the hollow cathode and with a counter electrode 5. The gas 1 undergoes interactions with oscillating electrons 6 in the hollow cathode discharge plasma. The plasma is generated in the incoming gas to be treated or in a mixture of this gas with an auxiliary gas 7. The auxiliary gas could be admitted for intensifying an ultraviolet radiation and/or plasma-chemical reactions. Typical example may be an excimer (excited dimer) gas, which forms a slightly bound excited molecular state of complexes that do not possess a stable ground state. Besides halogen dimers, for example iodine, I₂, or chlorine, Cl₂, also noble gases like xenon, Xe, or argon, Ar, or their mixtures can be used to form excimer complexes in plasma state (see B. Gellert and U. Kogelschatz, Appl. Phys. B 52, 1991). The excimer gas causes excimer radiation typically in UV or VUV regions originated inside the hollow cathode discharge plasma. This radiation may be capable to destroy most chemical bonds and the auxiliary gas can therefore play the role of an "in-situ" gas catalyst in the hollow cathode discharge plasma, during the treatment of the gas. The hollow cathode discharge plasma interacts with the inner walls 8 of the hollow cathode, which may become hot due to ion bombardment and must be kept below its melting temperature. The surface of inner walls may have a catalytic effect if the cathode material or a wall coating is properly selected. Typical catalytic material is platinum, Pt, but also other metals and oxides may be selected, depending on expected catalytic effect. Due to ion bombardment the inner walls of the hollow cathode may also release wall species 9 promoting plasma-chemical reactions in the hollow cathode discharge plasma. This type of catalysis can be very important in an overall efficiency of the gas treatment in the hollow cathode discharge plasma according to the present invention. After being treated in the hollow cathode discharge plasma the gas is flowing out as a transformed gas 10.

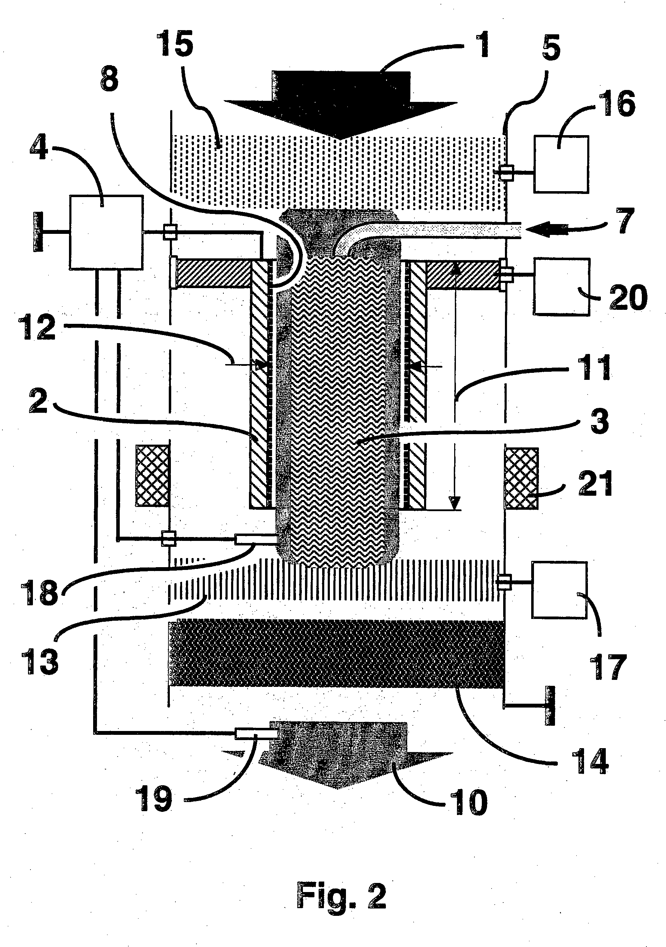

Referring to Fig. 2, an embodiment of the apparatus for plasma treatment of gas according to the method described in the present invention will be described. At least one hollow cathode 2 is used and connected to the means 20 for heating and/or cooling and has a length 11 longer than a distance 12 between opposite walls 8. A suitable ratio between this length 11 and the distance between the walls 8 (width) should exceed a factor of two. The appropriate width of the cathode could preferably be less than 1 mm. Walls 8 could either be composed of or coated by a catalyst material. The cathode is disposed for generation of a hollow cathode discharge plasma 3. The plasma is generated by a generator 4 connected to the hollow cathode and a counter electrode 5, whereby the counter electrode could favorably serve also as an inlet of a gas 1 to be treated. Although both DC and AC generators can be used, for the purpose of this invention an AC generator should provide power of high frequency. Higher frequencies, for instance radio frequencies up to 100 MHz, are favorable for generation of non-equilibrium plasma, in which only electrons are capable to follow changes of the field and absorb its energy. Pulsed power is also suitable for generation of non-equilibrium chemically active plasma. The hollow cathode discharge plasma is generated either in the gas to be treated or in a mixture of this gas and an auxiliary gas 7. The particle filter 15 can be installed in the counter electrode and is disposed for mechanical filtering of the gas 1. The particle filter is connected with the means for heating and/or cooling. Preheating of the gas by the filter can favorably enhance chemical reactions during the gas treatment in the hollow cathode discharge plasma. A quenching electrode 13 is installed downstream the gas after the hollow cathode. The quenching electrode is disposed to slow down chemical reactions in the gas flowing after treatment in the hollow cathode discharge plasma and to stabilize a part of resulting products. The temperature of the quenching electrode is very important and the electrode is therefore connected to the means for heating and/or cooling. The solid state catalyst 14 is disposed for additional treatment of the transformed gas flowing from the hollow cathode discharge plasma. A parameter detector system 18 may be installed for detection of parameters of the hollow cathode discharge plasma, for instance through an optical emission. The detector can be used through a suitable feedback electronics circuitry for control of the generator 4. Moreover an outlet parameter detector system 19 installed in the transformed gas 10 can be used in similar way for control of the generator 4. Both detectors can be used in an advanced arrangement also for control of the optimal temperature of the particle filter, the hollow cathode and the quenching electrode, respectively. The treatment of the gas 1 in the hollow cathode discharge plasma 3 may be enhanced by a magnetic field generated by magnets 21.

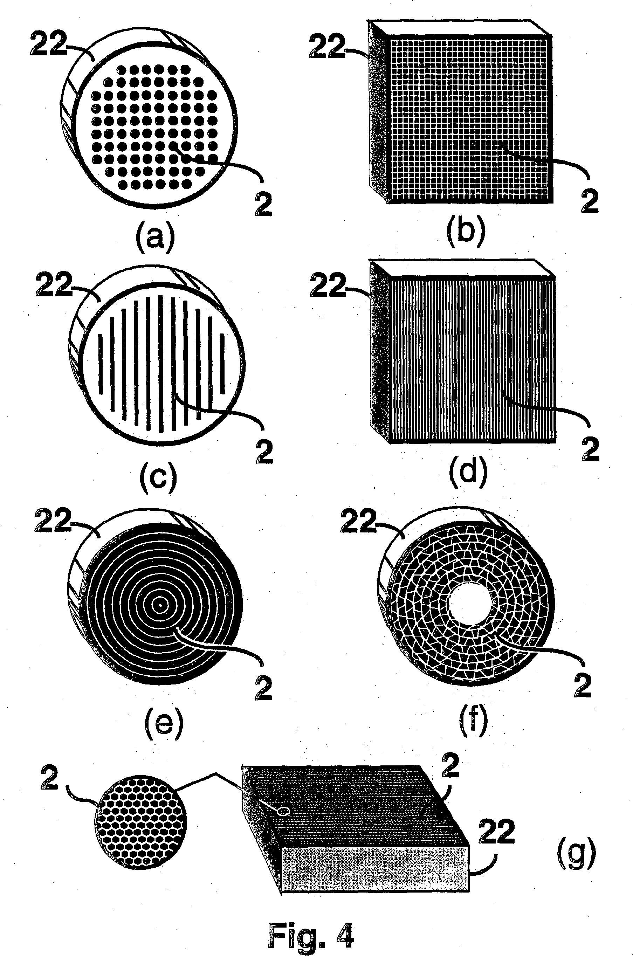

By means of Figures 4 to 9 a number of embodiments for the present apparatus will be discussed.

Referring to Fig. 4 a first example will be described, which is related to the method and the apparatus according to the present invention shown in Fig. 1 and Fig. 2. The schematic figure shows different suitable geometries of integrated systems 22 of hollow cathodes 2 for treatment of gas. Fig. 4(a) shows cylindrical system with an array of cylindrical hollow cathodes. Fig. 4(b) shows a rectangular system of rectangular hollow cathodes. Note that such a geometry may be assembled as a multi-layer system of metal grids or sheets. Fig. 4(c) shows the cylindrical system with an array of parallel linear hollow cathodes. Fig. 4(d) shows rectangular system with parallel rectangular hollow cathodes. Fig. 4(e) is a cylindrical system with concentric hollow cathodes, Fig. 4(f) is a cylindrical system with an inserted structure made from planar metal foil and wrapped metal foil placed on top of each other and rolled into cylinder shape, and finally Fig. 4(g) is a system of hexagonal hollow cathodes.

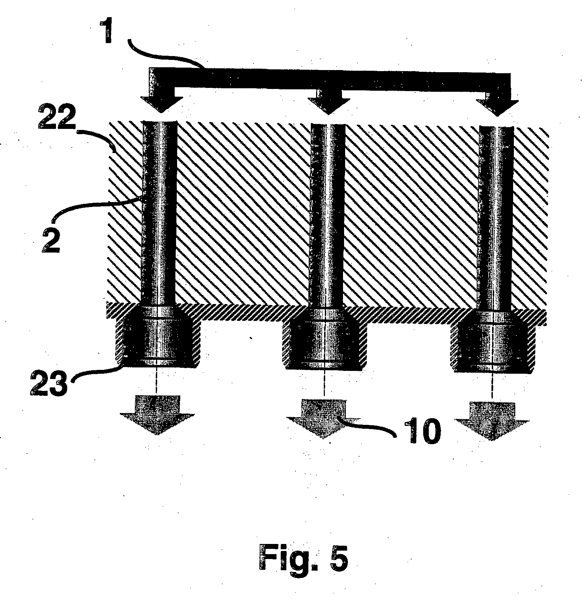

Referring to Fig. 5 an embodiment will be described, which is related to the method and the apparatus according to the present invention. A schematic figure shows a cross section of an integrated system 22 of cylindrical hollow cathodes aligned with a complementary system 23 forming cathode terminations with sharp edges. Both systems may be fabricated and aligned by standard methods of micro-mechanics. The sharp edges enhance generation of the discharge at high gas pressures, for instance by forming of corona or a plasma torch, which enables initiation and maintenance of the hollow cathode discharge plasma.

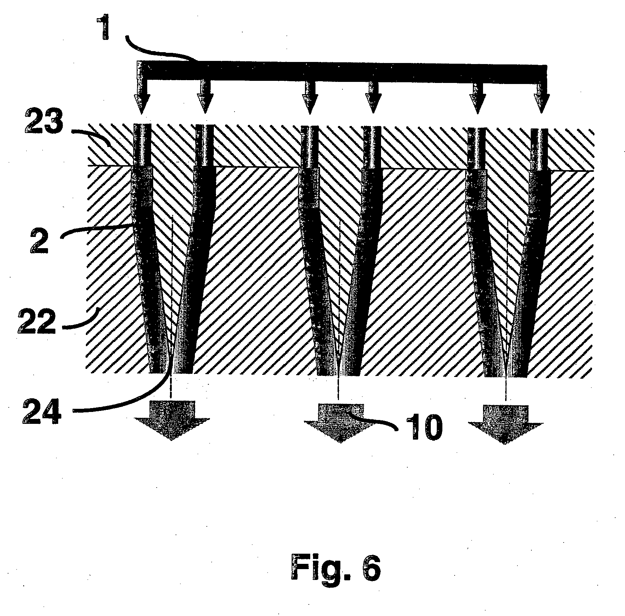

Referring to Fig. 6, another embodiment will be described, which is related to the method and the apparatus according to the present invention. The schematic figure shows a cross section of an integrated system 22 of hollow cathodes 2 with conical forms aligned with a complementary system 23 with a set of sharp cones centered in the hollow cathodes 2. Both systems may be fabricated and aligned by standard methods of micro-mechanics. The sharp cones produce high intensity of electric field and enable initiation and maintenance of the hollow cathode discharge plasma.

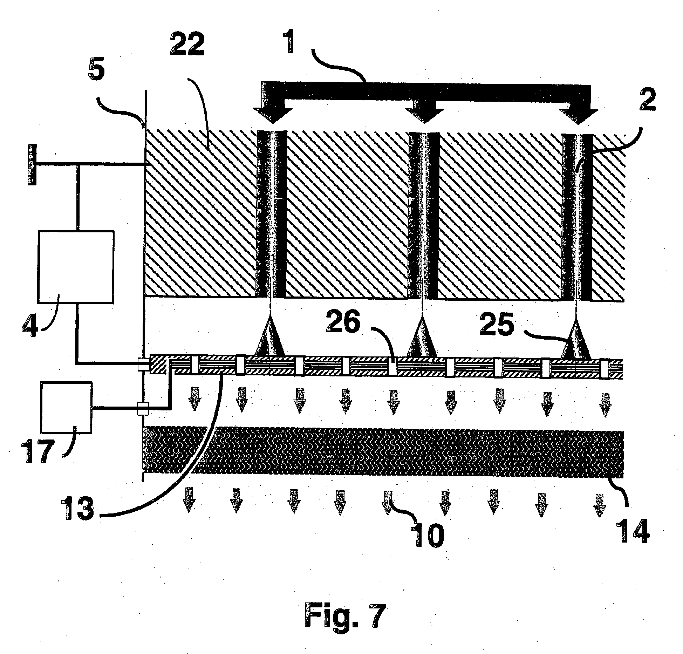

Referring to Fig. 7, still a further embodiment will be described, which is related to the method and the apparatus according to the present invention. The schematic figure shows a cross section of an integrated system 22 of hollow cathodes 2 with an opposite system of sharp tips 25 arranged at the quenching electrode 13. The quenching electrode in this example is arranged as a counter electrode connected to a counter pole of the generator 4. A high voltage applied between each tip 25 and the edges of an opposite facing hollow cathode 2 causes gas breakdown and can generate filamentary discharges of a corona type. This discharge enables initiation and maintenance of the hollow cathode discharge plasma. Moreover the system can work as a hybrid plasma system of hollow cathode and corona discharges for treatment of the gas. The transformed gas 10 will flow through a system of holes 26 provided in the quenching electrode 13.

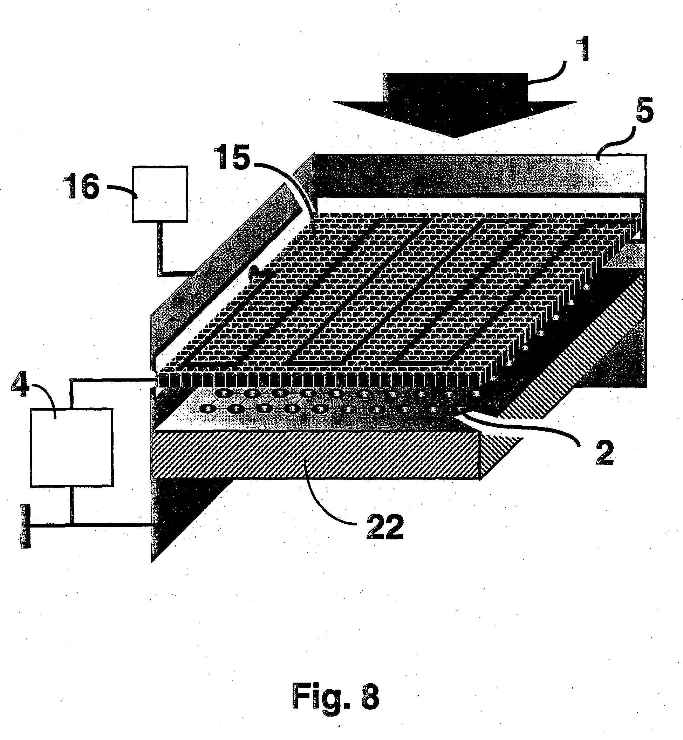

Referring to Fig. 8, still a further embodiment of the invention will be described, which is related to the method and the apparatus according to the present invention. The schematic figure shows a simple schematic view of an integrated system 22 of hollow cathodes 2 with the particle filter 15 arranged as a counter electrode and connected to the generator 4. It is to be noted that besides the cartridge 5, quenching electrode 13 (see Fig. 6) and the particle filter, the role of counter electrode may also have a solid state catalyst 14 (shown in Fig. 2), or all respective components together, or their combinations.

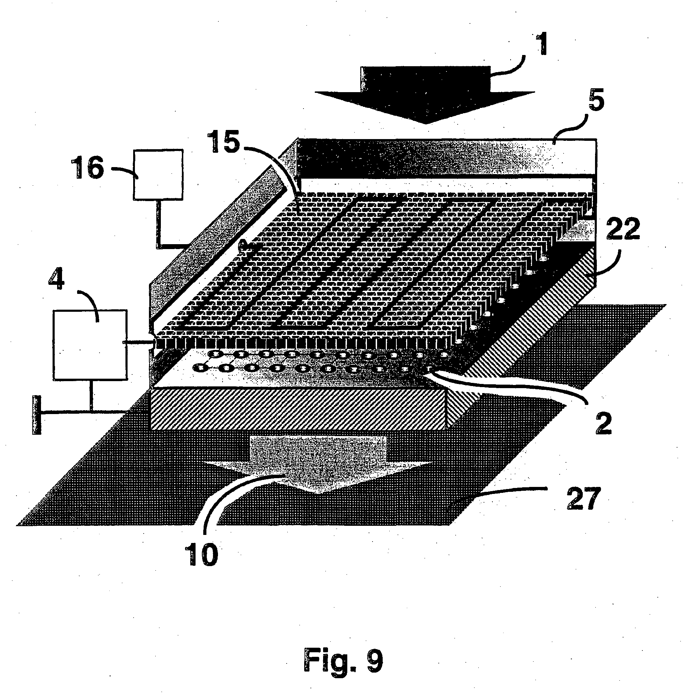

Referring to Fig. 9 an example of utilization of the method and the apparatus according to the present invention for treatment of surfaces will be described. The schematic figure shows a simple schematic view of an arrangement similar to that in Fig. 7, where the transformed gas 10 is a plasma activated gas suitable for subsequent treatment of a surface 27 facing the integrated system 22 of hollow cathodes 2 downstream the gas flow. In this case the quenching electrode 13 and the solid state catalyst (shown in Fig.2) may be omitted. Surface 27 may be of solid or liquid state. However a treatment of "gaseous surfaces" (i.e. other gases) by the transformed gas 10 from the apparatus according to the present invention may be considered, too.

The inventive method and apparatus for plasma treatment of gas, particularly for transformation, passivation and stabilization of polluting and toxic admixtures is advantageous for being applied for the cleaning of large amounts of flue gas from industrial production, for instance, when arranged in multi-modular systems of filters. Single modules with integrated systems of hollow cathodes made by micro-mechanic technology or by structuring of metal foils are suitable for plasma exhaust after-treatment of engines like Diesel motors, turbines, etc. The gas treatment according to the invention can also be used for production of activated gas suitable for subsequent treatment of stationary or moving surfaces. Plasma filters according to the invention can also serve in final or integrated cleaning stages in conventional cleaning and filtering systems.

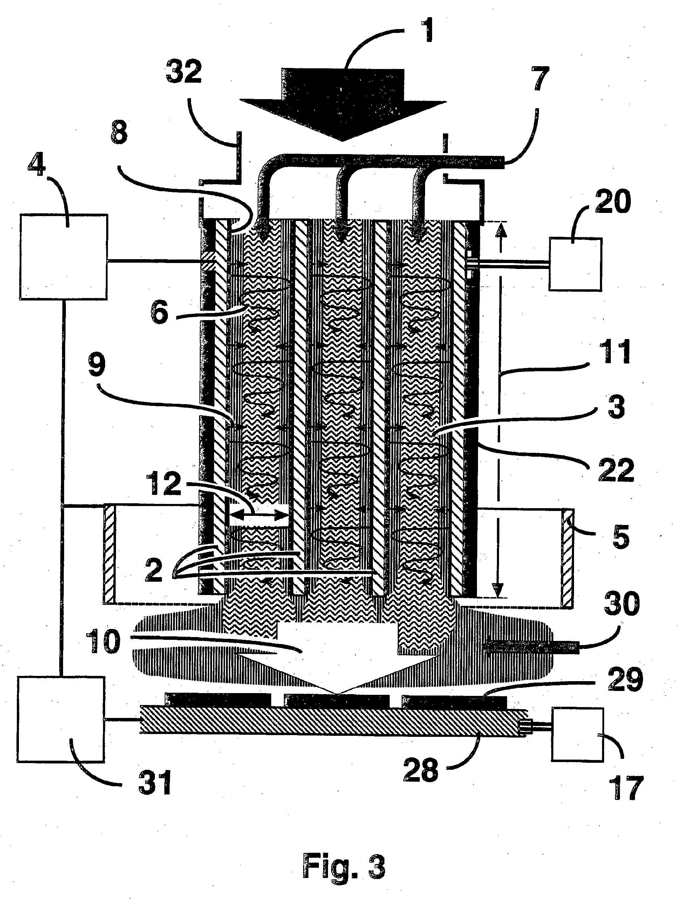

Referring to Fig. 3, an apparatus for surface treatment will be described. A gas 1 to be treated is flowing through an integrated hollow cathode system 22 comprising at least two hollow cathodes 2 with a hollow cathode discharge plasma 3 at pressures exceeding 13.3 kPa (≈100 Torr). Each hollow cathode has a length 11, which is longer than a distance 12 between opposite facing inner walls 8. A suitable ratio between this length 11 and the distance between the walls 8 (width) should exceed a factor of two. The appropriate width of the cathodes is less than 1 mm. Adjacent hollow cathodes should be close enough from each other to enable interaction of their discharge plasmas. The plasma is generated by a generator 4 connected to the integrated hollow cathode system and to an auxiliary bias source 31 of a substrate holder 28 with substrates 29 and/or to a counter electrode 5. In many cases the counter electrode and the bias source 31 can be omitted and the generator 4 can be connected only between the integrated hollow cathode system and the substrate holder with substrates electrically grounded. Although both DC and AC generators can be used, for the purpose of this invention an AC generator should provide power of high frequency. Higher frequencies, for instance radio frequencies up to 100 MHz, are favorable for generation of non-equilibrium plasma, in which only electrons are capable to follow changes of the field and absorb its energy.

Pulsed power is also suitable for generation of non-equilibrium chemically active plasma. The gas 1 undergoes interactions with oscillating electrons 6 in the hollow cathode discharge plasma. The plasma is generated in the incoming gas or in a mixture of this gas with an auxiliary gas 7. The auxiliary gas could be admitted for intensifying ultraviolet radiation and/or plasma-chemical reactions. Typical example may be an excimer (excited dimer) gas, which causes excimer radiation typically in UV or VUV regions originated inside the hollow cathode discharge plasma. This radiation may be capable to destroy most chemical bonds and the auxiliary gas 7 therefore can play the role of an "in-situ" gas catalyst in the hollow cathode discharge plasma, during the treatment of the gas and it can be very important in treatment of surfaces. The hollow cathode discharge plasma interacts with the inner walls 8 of the hollow cathode, which may become hot due to ion bombardment and must be kept below its melting temperature, for instance by a means for heating or cooling 20. The surface of inner walls may have a catalytic effect if the cathode material is properly selected or coated by a catalyst material. Typical catalytic material is platinum, Pt, but also other metals and oxides may be selected, depending on expected catalytic effect. Due to ion bombardment the inner walls of the hollow cathode may also release wall species 9 promoting plasma-chemical reactions in the hollow cathode discharge plasma. This type of catalysis can be very important in an overall efficiency of the gas treatment in the hollow cathode discharge plasma according to the present invention. The integrated hollow cathode system 22 is equipped by a gas distributor 32 to ensure either uniform or controlled non-uniform treatment of the gas in individual hollow cathodes over the integrated system. After being treated in the hollow cathode discharge plasma the gas is flowing out as a transformed gas 10. This gas is used for subsequent treatment of surfaces of substrates with planar or hollow geometry, particularly for functionalization, activation, disinfecting, sterilization, drying, activated deposition of films and etching or cleaning the surfaces. The substrate holder with substrates is installed against the integrated hollow cathode system with the substrates facing the outlet of the integrated hollow cathode system at a distance ensuring their contact with the transformed gas. A second auxiliary gas 30 can be used to carry out plasma-chemical reactions in the decaying plasma outside the integrated hollow cathode system. The second auxiliary gas is entered between the integrated hollow cathode system and the substrates to ensure its interactions with the transformed gas and subsequently with the substrates. The substrates may be heated or cooled by a means for substrate heating and/or cooling 17, depending on the desired surface treatment. At atmospheric pressure AC operation of the apparatus, it is often possible to treat the plastic or paper substrates even without any intentional cooling of their surfaces. The apparatus according to the present invention can be used for treatment of large area substrates. For this purpose either the substrate holder with substrates and/or the integrated hollow cathode system should be movable with respect to each other. The treatment of gas in the hollow cathode discharge plasma and subsequent surface treatment of substrates may be enhanced by a magnetic field. Examples of integrated hollow cathode systems 22 are shown in Fig. 4.

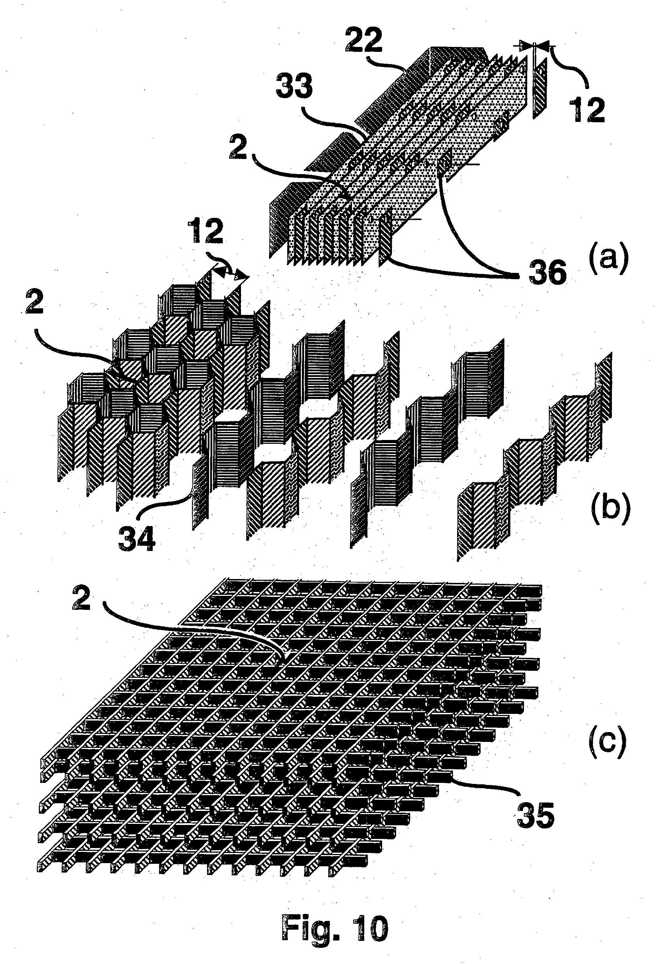

Referring to Fig. 10 a schematic figure shows examples of assembling of the integrated system of hollow cathodes from planar sheets 33, or shaped sheets 34, or grids 35, or combinations of such components. The sheets and grids should be fabricated from electrically conductive or semi-conductive material. There are possibilities however, to utilize conductive or semi-conductive surfaces only, or conductive sheets and/or grids covered by insulating material (when AC type of the generator 4 is used). Also other combinations might be desirable, e.g. material compositions, different materials used for individual sheets and/or grids in the assembly of the integrated hollow cathode system, etc. Desired distances 12 between the opposite inner walls of the hollow cathodes are adjusted by shaping of these sheets or grids and/or by auxiliary inserts 36 between the sheets. The inserts can be used also as side terminations of the linear hollow cathodes.

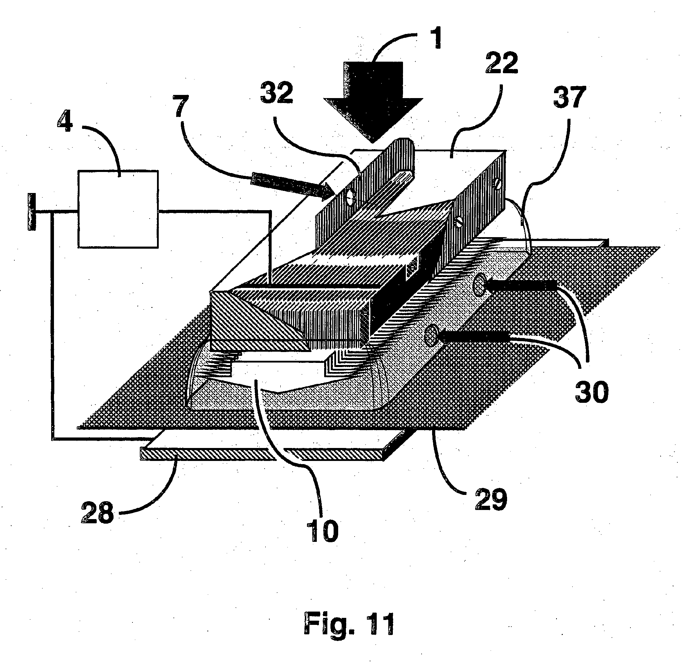

Referring to Fig. 11 an embodiment will be described, which is related to the apparatus according to the present invention, particularly for treatment of large area substrates. A schematic figure shows a cross section of a rectangular integrated system 22 of linear hollow cathodes assembled from individual metal sheets with auxiliary inserts, as shown in Fig. 4(a). The edges of sheaths can enhance starting of the discharge at high gas pressures, for instance by initiating corona discharges, which enable initiation and maintenance of the fused hollow cathode discharge plasma over the outlet of the integrated hollow cathode system. The substrate 29 can be moved with respect to the system 22, or vice versa. To protect the surface treatment by the transformed gas 10 against influence of an ambient atmosphere the system 22 can be equipped by a shielding 37. The second auxiliary gas 30 can be admitted into this shielding.

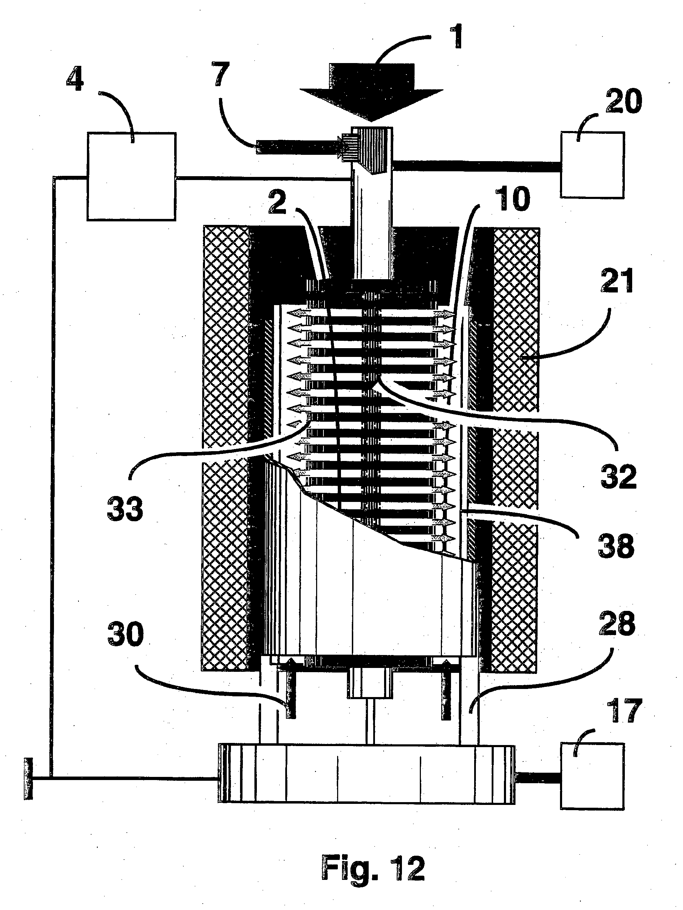

Referring to Fig. 12, an embodiment will be described, which is related to the apparatus according to the present invention, particularly for treatment of hollow substrates, for instance cylinders, tubes, pipes, etc. A schematic figure shows a cross section of the integrated hollow cathode system 22 installed inside a substrate with hollow geometry 38. The conductive sheets 33 composing hollow cathodes 2 in the integrated hollow cathode system are formed according to the inner geometry of the substrate. For instance a cylinder substrate can be treated by the integrated hollow cathode system comprised from circular sheets. The gases 1 and 7 are distributed by the distributor 32 into each individual hollow cathode i.e., between each pair of adjacent sheets. A magnetic field is generated by magnet means 21, for further enhancing the hollow cathode discharge plasma. In this example the magnetic means may be fulfilled by electromagnetic coil, which generates magnetic field perpendicular to the sheets 33 thereby enhancing oscillations of electrons between opposite walls of hollow cathodes. The magnetic field may be used also for suitable rotation and/or oscillations of the plasma around the integrated hollow cathode system, particularly at reduced gas pressures.

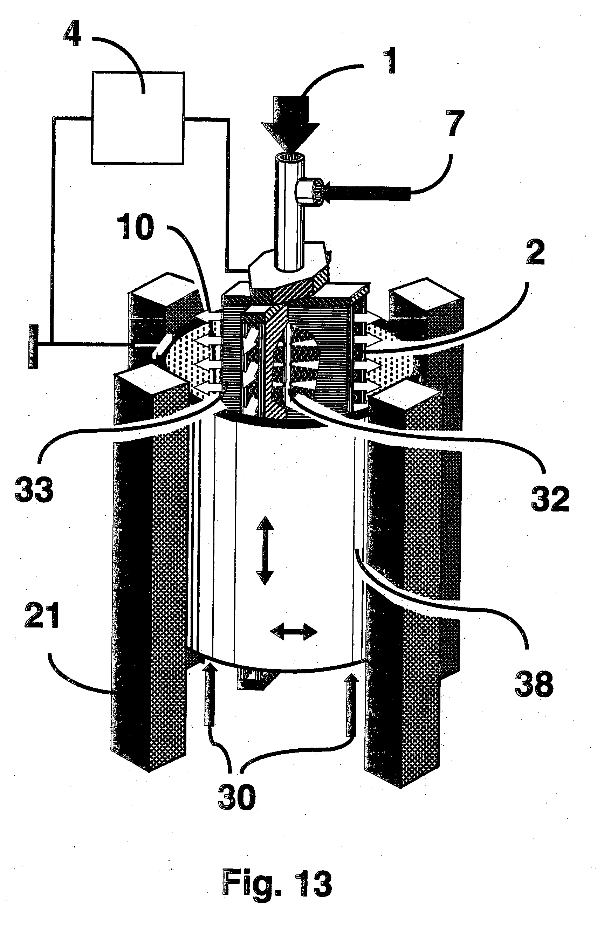

Referring to Fig. 13, still a further embodiment of the apparatus according to the present invention, particularly for treatment of hollow substrates will be described. A schematic figure shows the integrated hollow cathode system with rectangular sheets 33 in four hollow cathodes arranged into a "cross" inside the substrate 38. The flowing gas 1 is admitted into hollow cathodes 2 through the gas distributor 32. Note that the integrated hollow cathode system can comprise a number of rectangular cathodes arranged in a "star" geometry. A magnetic field can be generated by magnet means 21, for instance by permanent magnets. To ensure a uniform treatment of the surface the substrate can be moved with respect to the hollow cathode system, or vice versa.

The inventive apparatus for plasma treatment of surfaces, particularly for functionalization, activation, disinfecting, sterilization, drying, etching or cleaning the surfaces and activated deposition of films can be linearly scaled up for treatment of very large area substrates. For instance an atmospheric plasma treatment of running plastic webs can be carried out by an inert gas (e.g., neon, argon) activated in a fused hollow cathode discharge generated by a linear integrated hollow cathode system across the web. Modules with integrated hollow cathode systems made by structuring or shaping of metal foils, or by micro-mechanic technology, are suitable not only for plasma treatment inside cylinders and tubes, but also for different rectangular and more complicated hollow substrates. An oscillating magnetic field generated by electromagnetic coils or by movable permanent magnets can be used to control distribution of the plasma over the substrate surface, particularly at sub-atinospheric gas pressures. Sub-atmospheric operation of the apparatus according to the present invention can be advantageous for special film deposition regimes where an enhanced sputtering and/or evaporation of the cathode material may be combined with the plasma-chemical processes in the activated gas.

It will be understood by those skilled in the art that various modifications and changes may be made to the present invention without departure from the scope thereof, which is defined by the appended claims.

## Claims

1. A method for plasma treatment of gas, particularly for transformation, passivation and stabilization of polluting and toxic admixtures, comprising the steps of:
inserting a flowing gas (1) to be treated through a hollow cathode (2) provided with a counter electrode (5);
generating a hollow cathode discharge plasma (3) by a generator (4) connected to the hollow cathode (2), whereby the flowing gas (1) will undergo interactions with oscillating electrons (6) in the hollow cathode discharge plasma being generated in the flowing gas; and
exhausting the flowing gas as a transformed gas (10) after being treated in the hollow cathode discharge plasma,
**characterized in that** the method is a method for plasma treatment of gas, at gas pressures exceeding 13.3 kPa, whereby said flowing gas (1) has a gas pressures exceeding 13.3 kPa, said method comprising the further steps of:
controlling the interaction of said hollow cathode discharge plasma with inner walls (8) of the hollow cathode by keeping the inner walls at a temperature below their melting point;
whereby at least one of:
said inner walls providing a catalytic effect; and
said inner walls releasing wall species (9) promoting plasma-chemical reactions in the hollow cathode discharge plasma.

2. The method of claim 1, **characterized by** the further step of mixing the flowing gas (1) to be treated with an auxiliary gas (7) for obtaining a suitable mixing of gas, whereby the auxiliary gas intensifies ultraviolet radiation and/or plasma-chemical reactions.

3. An apparatus for plasma treatment, comprising:
at least one hollow cathode (2);
generator means (4);and;
said at least one hollow cathode (2) being disposed for generation of a hollow cathode discharge plasma (3) by means of said generator means (4) connected to said at least one hollow cathode and to a counter electrode (5);
said counter electrode further being disposed as an inlet means of a flowing gas (1) into the hollow cathode discharge plasma generated in this flowing gas;
**characterized in that** said apparatus further comprises:
a means (32) for introducing the gas at pressures exceeding 13.3 kPa,
a first means (20) for heating and/or cooling,
said at least one hollow cathode (2) being connected to said first means (20) for heating and/or cooling the inner walls (8) of the hollow cathode (2);
said hollow cathode having a length (11) longer than a distance (12) of less than 1 mm between opposite facing walls (8), whereby at least one of: said inner walls (8) are capable of providing a catalytic effect; and said inner walls (8) are capable of releasing wall species (9) promoting plasma-chemical reactions in the hollow cathode discharge plasma.

4. An apparatus for plasma treatment of gas, according to claim 3, particularly for transformation, passivation and stabilization of polluting and toxic admixtures, **characterized by**
particle filter means (15); and
solid state catalyst means;
said particle filter means (15) is connected to a second means (16) for heating and/or cooling being disposed in said counter electrode for filtering the flowing gas to be treated;
said filter means being installed upstream the flowing gas before the hollow cathode and a quenching electrode (13) connected to a further means (17) installed downstream a transformed flowing gas (10) after the hollow cathode and a solid state catalyst (14) for additional treatment of the transformed flowing gas.

5. The apparatus according to claim 4, **characterized in that** the flowing gas (1) entering the hollow cathode is mixed with an auxiliary gas (7), which intensifies ultraviolet radiation and/or plasma-chemical reactions.

6. The apparatus according to claim 4 or 5, **characterized by**
a parameter detector system (18) arranged for detection of parameters of the hollow cathode discharge plasma and for controlling the generator means (4); and
an outlet parameter detector system (19) in the transformed flowing gas (10) for control of the generator means (4).

7. The apparatus according to claim 6, **characterized in that** a magnetic field is generated by magnet means (21), for further enhancing the hollow cathode discharge plasma (3).

8. The apparatus according to any of the claims 3 to 7, **characterized in that** at least one integrated system (22) comprising a plurality of hollow cathodes is installed in the counter electrode (5).

9. The apparatus according any of the claims 3 to 7, **characterized in that** the integrated cathode system (22) is aligned with at least one complementary system (23) forming cathode terminations having sharp edges for enabling initiation and maintenance of the hollow cathode discharge plasma.

10. The apparatus according to any of the claims 3 to 7, **characterized in that**
hollow cathodes in the integrated system have conical forms, and the integrated system is aligned with the complementary system forming sets of sharp cones (24) centered within the hollow cathodes for enabling initiation and maintenance of the hollow cathode discharge plasma.

11. An apparatus according to any of the claims 3 to 7, **characterized in that**
a quenching electrode (13) is provided by means of sharp tips (25) opposite facing the hollow cathodes and enabling initiation and maintenance of the hollow cathode discharge plasma;
the quenching electrode (13) further is provided with holes for a gas outflow (26); and
the quenching electrode is connected to the generator means.

12. An apparatus according to any of the claims 3 to 7, **characterized in that** the particle filter means (15) is coupled to the generator means (4) to serve as a counter electrode together with or instead of the counter electrode (5).

13. An apparatus for plasma treatment of surfaces according to claim 3, applying plasma treatment of gas, **characterized in that**:
an integrated hollow cathode system (22) connected with a means for cathode cooling or heating (20) comprises at least two identical hollow cathodes (2) for treatment of flowing gas (1) in a hollow cathode discharge plasma (3), and adjacent hollow cathodes are close enough from each other to enable interaction of their discharge plasmas;
a substrate holder (28) with substrates (29) connected to a means for substrate cooling or heating (17) is installed against the integrated hollow cathode system, the substrates facing the outlet of the integrated hollow cathode system are in contact with a transformed gas (10), whereby the transformed gas, which has been treated in the hollow cathode discharge plasma by oscillating electrons (6) and by interactions with inner walls and wall species (9), interacts with the substrates;
a generator (4) is connected to the integrated hollow cathode system and to an auxiliary source (31) biasing the substrate holder with substrates and/or to a counter electrode (5) and the flowing gas enters a gas distributor (32) installed at the integrated hollow cathode system for obtaining uniform distribution of gas into individual hollow cathodes.

14. The apparatus according to claim 13, **characterized in that** the flowing gas, which enters the integrated hollow cathode system, is mixed with a first auxiliary gas (7), which intensifies plasma-chemical reactions.

15. The apparatus according to claim 13 or 14, **characterized in that** a second auxiliary gas (30) is entered between the integrated hollow cathode system and the substrates and interacts with the transformed gas and the substrates.

16. The apparatus according to claim 15, **characterized in that** the integrated system of hollow cathodes constitutes electrically conductive or semi-conductive planar sheets (33), or shaped sheets (34), or grids (35), or combinations of such components and that the desired distances between the opposite inner walls of hollow cathodes are adjusted by shaping of these sheets or grids and/or by auxiliary inserts (36).

17. The apparatus according to claim 16, **characterized in that** the transformed gas flowing from the integrated system of hollow cathodes is shielded by a shielding (37) against the ambient atmosphere.

18. The apparatus according to claim 16 or 17, **characterized in that** the integrated hollow cathode system is installed inside a substrate with hollow geometry (38) and the conductive sheets constituting hollow cathodes in the integrated hollow cathode system are formed according to the inner form of the substrate.

19. The apparatus according to any of the claims 13 to 18, **characterized in that** a magnetic field is generated by magnet means (21), for further enhancing the hollow cathode discharge plasma (3).

20. The apparatus according to any of the claims 13 to 19, **characterized in that** the substrate holder with substrates and the integrated hollow cathode system are movable with respect to each other.

## Patentansprüche

1. Verfahren zur Plasmabehandlung von Gas, insbesondere zur Transformation, Passivation und Stabilisation von verunreinigenden und giftigen Zusätzen, umfassend die Schritte:
Einführen eines zu behandelnden strömenden Gases (1) durch eine mit einer Gegenelektrode (5) versehene Höhlkathode (2);
Generieren eines Hohlkathodenentladungsplasmas (3) durch einen mit der Hohlkathode (2) verbundenen Generator (4), wobei das strömende Gas (1) Interaktionen mit oszillierenden Elektronen (6) in dem im strömenden Gas generierten Hohlkathodenentladungsplasma ausgesetzt wird; und
Absaugen des strömenden Gases als ein transformiertes Gas (10) nach dessen Behandlung in dem Hohlkathodenentladungsplasma,
**dadurch gekennzeichnet, dass**
das Verfahren ein Verfahren zur Plasmabehandlung von Gas ist, bei Gasdrücken über 13,3 kPa, wobei das strömende Gas (1) einen Gasdruck von über 13,3 kPa aufweist, wobei das Verfahren die weiteren Schritte umfasst:
Steuerung der Interaktion des Hohlkathodenentladungsplasmas mit Innenwänden (8) der Hohlkathode indem die Innenwände bei einer Temperatur unterhalb ihres Schmelzpunkts gehalten werden;
wobei zumindest eine von:
den Innenwänden einen katalytischen Effekt bereitstellt; und
den Innenwände Wandteilchen (9) freisetzt, die plasma-chemische Reaktionen in dem Hohlkathodenentladungsplasma fordern.

2. Verfahren nach Anspruch 1,
**gekennzeichnet durch**
den weiteren Schritt des Vermischens des zu behandelnden strömenden Gases (1) mit einem Zusatzgas (7), um eine geeignete Gasmischung zu erhalten, wobei das Zusatzgas ultraviolette Strahlung und/oder plasma-chemische Reaktionen intensiviert.

3. Vorrichtung zur Plasmabehandlung, umfassend:
zumindest eine Hohlkathode (2);
Generatormittel (4); und;
wobei die zumindest eine Hohlkathode (2) angeordnet ist zur Generierung eines Hohlkathodenentladungsplasmas (3) mittels des mit der zumindest einen Hohlkathode und mit einer Gegenelektrode (5) verbundenen Generatormittels (4);
wobei die Gegenelektrode des Weiteren angeordnet ist als ein Einlassmittel eines strömenden Gases (1) in das in diesem strömenden Gas generierte Hohlkathodenentladungsplasma;
**dadurch gekennzeichnet, dass**
die Vorrichtung des Weiteren umfasst:
ein Mittel (32) zur Einleitung des Gases bei Drücken von mehr als 13,3 kPa, ein erstes Mittel (20) zur Erwärmung und/oder Kühlung,
die zumindest eine Hohlkathode (2) ist zur Erwärmung und/oder Kühlung der Innenwände (8) der Hohlkathode (2) mit dem ersten Mittel (20) verbunden,
wobei die Hohlkathode eine Länge (11) aufweist, die länger ist als ein Abstand (12) von weniger als 1 mm zwischen gegenüberliegenden zugewandten Wänden (8) wobei zumindest eine von:
den Innenwänden (8) einen katalytischen Effekt bieten kann; und
den Innenwänden (8) Wandteilchen (9) freisetzen kann, die plasma-chemische Reaktionen in dem Hohlkathodenentladungsplasma fördern.

4. Vorrichtung zur Plasmabehandlung von Gas nach Anspruch 3, insbesondere zur Transformation, Passivation und Stabilisation von verunreinigenden und giftigen Zusätzen, **gekennzeichnet durch**
Partikelfiltermittel (15); und
Festkörperkatalysatormittel;
wobei das Partikelfiltermittel (15) zur Erwärmung und/oder Kühlung mit einem zweiten Mittel (16) verbunden ist, das in der Gegenelektrode zur Filterung des zu behandelnden strömenden Gases angeordnet ist;
wobei das Filtermittel dem strömenden Gas vorgeschaltet vor der Hohlkathode installiert ist und eine mit einem weiteren Mittel (17) verbundene Löschelektrode (13) einem transformierten strömenden Gas (10) nachgeschaltet installiert ist nach der Hohlkathode und einem Festkörperkatalysator (14) zur zusätzlichen Behandlung des transformierten strömenden Gases.

5. Vorrichtung nach Anspruch 4,
**dadurch gekennzeichnet, dass**
das in die Hohlkathode eindringende strömende Gas (1) mit einem Zusatzgas (7) vermischt wird, welches ultraviolette Strahlung und/oder plasma-chemische Reaktionen intensiviert.

6. Vorrichtung nach Anspruch 4 oder 5,
**gekennzeichnet durch**
ein Parameterdetektorsystem (18), angeordnet zur Detektierung von Parametern des Hohlkathodenentladungsplasmas und zur Steuerung des Generatormittels (4); und
ein Auslassparameterdetektorsystem (19) in dem transformierten strömenden Gas (10) zur Steuerung des Generatormittels (4).

7. Vorrichtung nach Anspruch 6,
**dadurch gekennzeichnet, dass**
zur weiteren Ausdehnung des Hohlkathodenentladungsplasmas (3) ein magnetisches Feld durch Magnetmittel (21) generiert wird.

8. Vorrichtung nach einem der Ansprüche 3 bis 7,
**dadurch gekennzeichnet, dass**
zumindest ein eine Vielzahl von Hohlkathoden umfassendes integriertes System (22) in der Gegenelektrode (5) installiert ist.

9. Vorrichtung nach einem der Ansprüche 3 bis 7,
**dadurch gekennzeichnet, dass**
das integrierte Kathodensystem (22) angeglichen ist an zumindest ein Kathodenabschlüsse formendes komplementäres System (23), wobei die Kathodenabschlüsse scharfe Kanten aufweisen, um Initiierung und Aufrechterhaltung des Hohlkathodenentladungsplasmas zu ermöglichen.

10. Vorrichtung nach einem der Ansprüche 3 bis 7,
**dadurch gekennzeichnet, dass**
Hohlkathoden in dem integrierten System konische Formen aufweisen und das integrierte System an das komplementäre System angeglichen ist, das Sets in den Hohlkathoden zentrierter scharfer Kanten (24) formt, um Initiierung und Aufrechterhaltung des Hohlkathodenentladungsplasmas zu ermöglichen.

11. Vorrichtung nach einem der Ansprüche 3 bis 7,
**dadurch gekennzeichnet, dass**
eine Löschelektrode (13) durch scharfe Spitzen (25) vorgesehen ist, welche den Hohlkathoden gegenüberliegend zugewandt sind und Initiierung und Aufrechterhaltung des Hohlkathodenentladungsplasmas ermöglichen;
die Löschelektrode (13) des Weiteren mit Löchern für einen Gasausfluss (26) versehen ist; und
die Löschelektrode mit dem Generatormittel verbunden ist.

12. Vorrichtung nach einem der Ansprüche 3 bis 7,
**dadurch gekennzeichnet dass**
das Partikelfiltermittel (15) mit dem Generatormittel (4) gekoppelt ist, um als eine Gegenelektrode zusammen mit oder anstelle der Gegenelektrode (5) zu dienen.

13. Vorrichtung zur Plasmabehandlung von Oberflächen nach Anspruch 3, wobei Plasmabehandlung von Gas angewandt wird, **dadurch gekennzeichnet, dass**:
ein integriertes mit einem Mittel zur Kathodenkühlung oder -erwärmung (20) verbundenes Hohlkathodensystem (22) zumindest zwei identische Hohlkathoden (2) zur Behandlung von strömendem Gas (1) in einem Hohlkathodenentladungsplasma (3) umfasst, und angrenzende Hohlkathoden dicht genug zueinander sind, um eine Interaktion deren Entladungsplasmen zu ermöglichen;
ein Substrathalter (28) mit Substraten (29), verbunden mit einem Mittel zur Substratkühlung oder -erwärmung (17), gegen das integrierte Hohlkathodensystem installiert ist, wobei die dem Auslass des integrierten Hohlkathodensystems zugewandten Substrate in Kontakt sind mit einem transformierten Gas (10), wobei das transformierte Gas, das in dem Hohlkathodenentladungsplasma durch oszillierende Elektronen (6) und durch Interaktionen mit Innenwänden und Wandteilchen (9) behandelt worden ist, mit den Substraten wechselwirkt;
ein Generator (4) verbunden ist mit dem integrierten Hohlkathodensystem und mit einer den Substrathalter mit Substraten vorspannenden Hilfsquelle (31) und/oder mit einer Gegenelektrode (5) und das strömende Gas in einen an dem integrierten Hohlkathodensystem installierten Gasverteiler (32) eindringt, um eine gleichmäßige Verteilung des Gases hinein in individuelle Hohlkathoden zu erreichten.

14. Vorrichtung nach Anspruch 13,
**dadurch gekennzeichnet, dass**
das strömende Gas, das in das Hohlkathodensystem eindringt, mit einem ersten Hilfsgas (7) vermischt wird, das plasma-chemische Reaktionen intensiviert.

15. Vorrichtung nach Anspruch 13 oder 14,
**dadurch gekennzeichnet, dass**
das ein zweites Hilfsgas (30) zwischen das integrierte Hohlkathodensystem und die Substrate eingebracht wird und mit dem transformierten Gas und den Substraten wechselwirkt.

16. Vorrichtung nach Anspruch 15,
**dadurch gekennzeichnet, dass**
das integrierte Hohlkathodensystem elektrisch leitfähige oder halb-leitfahige ebene Bahnen (33) oder geformte Bahnen (34) oder Gitter (35) oder Kombinationen dieser Komponenten bildet und dass die gewünschten Abstände zwischen den gegenüberliegenden Innenwänden von Hohlkathoden angepasst werden durch Formung der Bahnen oder Netze und/oder durch Zusatzeinlegeteile (36).

17. Vorrichtung nach Anspruch 16,
**dadurch gekennzeichnet, dass**
das von dem integrierten Hohlkathodensystem strömende transformierte Gas durch eine Abschirmung (37) gegen die Umgebungsatmosphäre abgeschirmt ist.

18. Vorrichtung nach Anspruch 16 oder 17,
**dadurch gekennzeichnet, dass**
das integrierte Hohlkathodensystem installiert ist in einem Substrat mit Hohlgeometrie (38) und die Hohlkathoden in dem integrierten Hohlkathodensystem bildenden leitenden Bahnen entsprechend der inneren Form des Substrats gebildet werden.

19. Vorrichtung nach einem der Ansprüche 13 bis 18,
**dadurch gekennzeichnet, dass**
das zur weiteren Förderung des Hohlkathodenentladungsplasmas (3) durch Magnetmittel (21) ein Magnetfeld erzeugt wird.

20. Vorrichtung nach einem der Ansprüche 13 bis 19,
**dadurch gekennzeichnet, dass**
das der Substrathalter mit Substraten und das integrierte Hohlkathodensystem zueinander beweglich sind.

## Revendications

1. Procédé pour le traitement au plasma d'un gaz, en particulier pour la transformation, la passivation et la stabilisation d'adjuvants polluants et toxiques, comprenant les étapes de :
insertion d'un gaz d'écoulement (1) à traiter à travers une cathode creuse (2) dotée d'une contre-électrode (5) ;
production d'un plasma de décharge à cathode creuse (3) par le biais d'un générateur (4) raccordé à la cathode creuse (2), dans lequel le gaz d'écoulement (1) va subir des interactions avec des électrons oscillants (6) dans le plasma de décharge à cathode creuse qui est généré dans le gaz d'écoulement ; et
échappement du gaz d'écoulement sous forme de gaz transformé (10) après avoir été traité dans le plasma de décharge à cathode creuse,
**caractérisé en ce que** le procédé est un procédé pour le traitement au plasma d'un gaz, à des pressions gazeuses excédant 13,3 kPa, dans lequel ledit gaz d'écoulement (1) a des pressions gazeuses excédant 13,3 kPa, ledit procédé comprenant les étapes supplémentaires de :
contrôle de l'interaction dudit plasma de décharge à cathode creuse avec les parois internes (8) de la cathode creuse en maintenant les parois internes à une température inférieure à leur point de fusion ;
dans lequel au moins une :
desdites parois internes sont capables d'offrir un effet catalytique ; et
desdites parois internes sont capables de libérer des espèces des parois (9) favorisant des réactions plasma-chimiques dans le plasma de décharge à cathode creuse.

2. Procédé selon la revendication 1, **caractérisé par** l'étape supplémentaire de mélange du gaz d'écoulement (1) à traiter avec un gaz auxiliaire (7) pour obtenir un mélange approprié de gaz, au moyen duquel le gaz auxiliaire intensifie un rayonnement ultraviolet et/ou des réactions plasma-chimiques.

3. Appareil pour le traitement au plasma, comprenant :
au moins une cathode creuse (2) ;
un moyen générateur (4) ; et
ladite au moins une cathode creuse (2) étant disposée de manière à produire un plasma de décharge à cathode creuse (3) par le biais dudit moyen générateur (4) raccordé à ladite au moins une cathode creuse et à une contre-électrode (5) ;
ladite contre-électrode étant en outre disposée comme moyen d'entrée d'un gaz d'écoulement (1) dans le plasma de décharge à cathode creuse généré dans ce gaz d'écoulement ;
**caractérisé en ce que** ledit appareil comprend en outre :
un moyen (32) pour l'introduction du gaz à des pressions excédant 13,3 kPa ;
un premier moyen (20) de chauffage et/ou refroidissement ;
ladite au moins une cathode creuse (2) étant raccordée audit premier moyen (20) pour le chauffage et/ou le refroidissement des parois internes (8) de la cathode creuse (2) ;
ladite cathode creuse ayant une longueur (11) supérieure à une distance (12) de moins de 1 mm entre les parois opposées (8), dans laquelle au moins une :
desdites parois internes (8) sont capables d'offrir un effet catalytique ; et
desdites parois internes (8) sont capables de libérer des espèces des parois (9), favorisant des réactions plasmachimiques dans le plasma de décharge à cathode creuse.

4. Appareil pour le traitement au plasma d'un gaz selon la revendication 3, en particulier pour la transformation, la passivation et la stabilisation d'adjuvants polluants et toxiques, **caractérisé par**
un moyen de filtration de particules (15) ; et
un moyen catalytique à l'état solide ;
ledit moyen de filtration de particules (15) est raccordé à un second moyen (16) de chauffage et/ou refroidissement qui est disposé dans ladite contre-électrode pour la filtration du gaz d'écoulement à traiter ;
ledit moyen de filtration étant installé en amont du gaz d'écoulement avant la cathode creuse et une électrode d'extinction (13) raccordée à un autre moyen (17) installé en aval d'un gaz d'écoulement transformé (10) après l'électrode creuse et un catalyseur à l'état solide (14) pour un traitement supplémentaire du gaz d'écoulement transformé.

5. Appareil selon la revendication 4, **caractérisé en ce que** le gaz écoulement (1) entrant dans la cathode creuse est mélangé avec un gaz auxiliaire (7), qui intensifie un rayonnement ultraviolet et/ou des réactions plasma-chimiques.

6. Appareil selon la revendication 4 ou 5, **caractérisé par**
un système détecteur de paramètres (18) arrangé pour détecter les paramètres du plasma de décharge à cathode creuse et contrôler le moyen générateur (4) ; et
un système détecteur de paramètres en sortie (19) dans le gaz d'écoulement transformé (10) pour contrôler le moyen générateur (4).

7. Appareil selon la revendication 6, **caractérisé en ce qu'**un champ magnétique est généré par un moyen magnétique (21), pour davantage améliorer le plasma de décharge à cathode creuse (3).

8. Appareil selon l'une quelconque des revendications 3 à 7, **caractérisé en ce qu'**au moins un système intégré (22) comprenant une pluralité de cathodes creuses est installé dans la contre-électrode (5).

9. Appareil selon l'une quelconque des revendications 3 à 7, **caractérisé en ce que** le système intégré de cathodes (22) est aligné avec au moins un système complémentaire (23) formant les terminaisons de cathode ayant des bords aiguisés pour permettre l'initiation et la maintenance du plasma de décharge à cathode creuse.

10. Appareil selon l'une quelconque des revendications 3 à 7, **caractérisé en ce que**
les cathodes creuses dans le système intégré ont des formes coniques, et le système intégré est aligné avec le système complémentaire formant des ensembles de cônes aiguisés (24) centrés dans les cathodes creuses pour permettre l'initiation et la maintenance du plasma de décharge à cathode creuse.

11. Appareil selon l'une quelconque des revendications 3 à 7, **caractérisé en ce qu'**
une électrode d'extinction (13) est fournie par le biais de pointes aiguisées (25) opposées aux cathodes creuses et permettant l'initiation et la maintenance du plasma de décharge à cathode creuse ;
l'électrode d'extinction (13) est en outre dotée de trous pour un écoulement du gaz (26) ; et
l'électrode d'extension est raccordée au moyen générateur.

12. Appareil selon l'une quelconque des revendications 3 à 7, **caractérisé en ce que** le moyen de filtration de particules (15) est couplé au moyen générateur (4) pour servir de contre-électrode avec ou à la place de la contre-électrode (5).

13. Appareil pour le traitement au plasma de surfaces selon la revendication 3, par application d'un traitement au plasma d'un gaz, **caractérise en ce que** :
un système intégré de cathodes creuses (22) raccordé à un moyen de chauffage ou de refroidissement de la cathode (20) comprend au moins deux cathodes creuses identiques (2) pour le traitement d'un gaz écoulement (1) dans un plasma de décharge à cathode creuse (3), et les cathodes creuses adjacentes sont suffisamment proches les unes des autres pour permettre une interaction de leurs plasmas de décharge ;
un support de substrat (28) avec des substrats (29) raccordé un moyen de refroidissement ou de chauffage de substrat (17) est installé contre le système intégré de cathodes creuses, les substrats faisant face à la sortie du système intégré de cathodes creuses sont en contact avec un gaz transformé (10), tandis que le gaz transformé, qui a été traité dans le plasma de décharge à cathode creuse par des électrons oscillants (6) et par des interactions avec les parois internes et les espèces des parois (9), interagit avec les substrats ;
un générateur (4) est raccordé à un système intégré de cathodes creuses et à une source auxiliaire (31) biaisant le support de substrat avec des substrats et/ou à une contre-électrode (5) et le gaz d'écoulement entre dans le distributeur de gaz (32) installé au niveau du système intégré de cathodes creuses pour obtenir une distribution uniforme du gaz dans les cathodes creuses individuelles.

14. Appareil selon la revendication 13, **caractérisé en ce que** le gaz d'écoulement, qui entre dans le système intégré de cathodes creuses, est mélangé avec un premier gaz auxiliaire (7), qui intensifie des réactions plasma-chimiques.

15. Appareil selon la revendication 13 ou 14, **caractérisé en ce qu'**un second gaz auxiliaire (30) entre entre le système intégré de cathodes creuses et les substrats et interagit avec le gaz transformé et les substrats.

16. Appareil selon la revendication 15, **caractérisé en ce que** le système intégré de cathodes creuses constitue des feuilles planaires (33), ou des feuilles mises en forme (34), ou des grilles (35) électriquement conductrices ou semiconductrices, ou des combinaisons de ces composants et **en ce que** les distances souhaitées entre les parois internes opposées des cathodes creuses sont ajustées par mise en forme de ces feuilles ou grilles et/ou par des insertions auxiliaires (36).

17. Appareil selon la revendication 16, **caractérisé en ce que** l'écoulement du gaz transformé à partir du système intégré de cathodes creuses est protégé de l'atmosphère ambiante par un écran de protection (37).

18. Appareil selon la revendication 16 ou 17, **caractérisé en ce que** le système intégré de cathodes creuses est installé à l'intérieur d'un substrat ayant une géométrie creuse (38) et les feuilles conductrices constituant les cathodes creuses dans le système intégré de cathodes creuses sont formées selon la forme interne du substrat.

19. Appareil selon l'une quelconque des revendications 13 à 18, **caractérisé en ce qu'**un champ magnétique est généré par un moyen magnétique (21), pour davantage améliorer le plasma de décharge à cathode creuse (3).

20. Appareil selon l'une quelconque des revendications 13 à 19, **caractérisé en ce que** le support de substrat avec des substrats et le système intégré de cathodes creuses sont mobiles l'un par rapport à l'autre.
